# EUROPÄISCHE PATENTSCHRIFT

(11) **EP 0 432 586 B1**
(45) Veröffentlichungstag und Bekanntmachung des Hinweises auf die Patenterteilung: **31.07.1996**
(21) Anmeldenummer: 90122904.7
(22) Anmeldetag: 30.11.1990
(51) Int. Cl.: B01D 39/16, B32B 5/12

(54) **Zweischichtiges Vliesstoffmaterial, insbesondere mit Langzeitfiltereigenschaften, sowie Verfahren zu seiner Herstellung**
Non-woven bi-layer material, specially with long-term filter properties, and process for its manufacture
Matériau non tissé à deux couches, notament avec des propriétés filtrantes de longue durée ainsi que son procédé de fabrication

(30) Priorität: 06.12.1989 DE 3940264
(43) Veröffentlichungstag der Anmeldung: 19.06.1991
(73) Patentinhaber: HOECHST AKTIENGESELLSCHAFT, 65926 Frankfurt am Main (DE)
(72) Erfinder: Seiler, Kurt, W-6941 Abtsteinach (DE); Heidel, Peter, Dr., W-8903 Bobingen (DE)

(56) Entgegenhaltungen:
- DE-A- 2 621 673
- DE-A- 2 940 712
- FR-A- 2 282 287
- US-A- 4 093 437

## Beschreibung

Die vorliegende Erfindung betrifft ein zweischichtiges Filtermaterial mit Langzeitfiltereigenschaften aus einem Tiefenfilter und einem Feinfilter sowie ein wirkungsvolles und wirtschaftliches Verfahren zu seiner Herstellung.

Mehrschichtige Filtermaterialien, speziell zur Entstaubung von Gasen, sind im Stand der Technik bereits bekannt. So benötigt man für die Konfektion beispielsweise von Filterschläuchen textile Flächengebilde, deren mechanische Eigenschaften eine Formstabilität auch über lange Benutzungszeiten bei einer während der Benutzung auf den Filterschlauch einwirkenden mechanischen oder pneumatischen Beanspruchung zum Zwecke der Abreinigung gewährleisten. So beschreibt z. B. die DE-OS 1 607 669 Filterstoffe aus Wollfilzen, die mit einem Stützgitter versehen sind, welches aus einem Gewebe, Gewirke oder sich kreuzenden Fadengelege besteht, wobei die Wollfilze auf das Stützgitter aufgenadelt werden. Ebenso kann ein z. B. aus gekräuselten Stapelfasern bestehendes Vlies so mit einem Trägermaterial vernadelt werden, daß sich auf der dem Vlies abgewandten Seite des Trägers ein Schlingenflor bildet. Die Herstellung derartiger Filtermaterialien ist aufwendig, da stets ein zusätzliches Stützgewebe erforderlich ist.

Die JA-59 080 313 beansprucht dagegen ein einschichtiges Filtermaterial, das aber im Gegensatz zur vorliegenden Erfindung einen Dichtegradienten aufweist. Die Herstellung derartig aufgebauter Filter ist jedoch schwierig und aufwendig, da zur Erzielung eines Dichtegradienten spezielle Spinn- und Ablegevorrichtungen für die Vliesbildung benötigt werden und die Anlagen für die Erzeugung derartiger Produkte sehr störanfällig sind. Aus DE-OS 2 621 673 sind zweischichtige Filtermaterialien aus Vliesstoffen bekannt, die aus einem Tiefen- und einem Feinfilter bestehen und eine homogene Dichte senkrecht zu ihrer Fläche aufweisen. Die Formfestigkeit derartiger Filter ist jedoch oftmals nicht ausreichend.

Es bestand immer noch die Aufgabe ein Filtermaterial zu finden, das sich durch eine hohe Standfestigkeit, gute Formstabilität und hohe Filtrationsrate, auch nach längerer mechanischer Beanspruchung über einen langen Benutzungszeitraum auszeichnet, und das einfach und wirtschaftlich, ohne Inanspruchnahme spezieller Vorrichtungen erzeugt werden kann.

Gegenstand der vorliegenden Erfindung ist ein zweischichtiges Filtermaterial bestehend aus einem Fein- und einem Tiefenfilter die beide senkrecht zu ihrer Fläche eine homogene Dichte aufweisen und aus Filamenten gleicher oder verschiedenartiger Polymere gefertigt sind, dadurch gekennzeichnet, daß der Tiefenfilter ein Flächengewicht von 150 bis 500 g/m² und eine Packungsdichte von 0,08 bis 0,15 g/cm³ aufweist und der Feinfilter, der sich auf der Reinluftseite befindet, ein Flächengewicht von 30 bis 100 g/m² und eine Packungsdichte von 0,1 bis 0,2 g/cm³ aufweist und der Tiefen- und Feinfilter in der Art und Weise miteinander verbunden sind, daß die Flächendeckung der Verbindungspunkte 75 % nicht übersteigt.

Das erfindungsgemäße Filter besteht aus einem dünnen, seinerseits ein- oder mehrschichtigen Vliesstoff, welches eine Packungsdichte von 0,1 bis 0,2 g/cm³ und ein Flächengewicht von 30 bis 100 g/m² aufweist und auf diese Weise als Feinfilter wirkt und einem darüber bzw. darunter liegenden dickeren seinerseits ein- oder mehrschichtigen Vliesstoff welches als Tiefenfilter fungiert und eine Packungsdichte von 0,08 bis 0,16 g/cm³ und ein Flächengewicht von 150 bis 500 g/m² besitzt. Die als Fein- oder Tiefenfilter wirkenden Vliesstoffe sind bevorzugt einschichtig. Zweischichtige Feinfilter und Tiefenfilter können bei der Lösung spezieller Filterprobleme Vorteile bringen. Das erfindungsgemäße Filter erhält durch das Feinfilter eine hohe Standfestigkeit und gute Plissierfähigkeit. Beide Filterbahnen weisen einen homogenen Aufbau, d. h. senkrecht zu ihrer Fläche eine gleichmäßige Faserdichte, auf. Zur Herstellung des erfindungsgemäßen Filtermaterials werden keine speziellen Vorrichtungen benötigt, so daß es einfach und wirtschaftlich herzustellen ist. Die Vliesstoffe können dabei aus glatten oder gekräuselten Fasern, z. B. Stapelfasern, oder Filamenten aus Polymeren sowie gegebenenfalls auch aus Kombinationen verschiedener Polymere bestehen. Das Fein- und das Tiefenfilter des erfindungsgemäßen Filters bestehen aus Vliesstoffen, wobei Filamentvliesstoffe besonders bevorzugt sind. Beispielsweise besteht das als Feinfilter wirkende Flächengebilde bevorzugt aus mit Bindefasern, mit Bindemitteln oder Schmelzbindern verfestigten Filamentvliesstoffen, das als Tiefenfilter wirkende Flächengebilde dagegen aus einem filzartigen Vliesstoff oder einem genadelten Filamentvliesstoff.

Es wurde nun überraschend gefunden, daß sich durch die Kombination der beiden Vliesstoffschichten mit unterschiedlicher Packungsdichte eine besonders hohe Filtrationsrate erreichen läßt. Unter der Packungsdichte versteht man allgemein den Quotienten aus dem Flächengewicht und der Dicke eines textilen Flächengebildes. Beide Bahnen sind mechanisch, z. B. durch Nadeln, oder durch Verschweißen oder Verkleben in der Art und Weise miteinander verbunden, daß der resultierende Schichtstoff noch eine ausreichende Luftdurchlässigkeit besitzt, so daß die Flächendeckung der Verbindungspunkte 75 %, vorzugsweise 50 % nicht überschreitet. Bei dem erfindungsgemäßen Filter wird die Obergrenze der Flächendeckung von der noch erzielbaren Luftdurchlässigkeit bestimmt, während die Forderung nach geringer Delaminierungsneigung und nach guter mechanischer Festigkeit und Steifigkeit ausschlaggebend ist, für die Untergrenze der Verbindungspunkte.

Zur besseren Filterung des Feinstaubes befindet sich der Feinfilter auf der Reinluftseite, so daß der Gasstrom bei dem erfindungsgemäßen Filter zweckmäßigerweise auf das Tiefenfilter geleitet wird, welches eine hohe Speicherkapazität besitzt und die Aufgabe hat, große Staubteilchen zurückzuhalten, um so eine Verstopfung des dahinter liegenden Feinfilters zu vermeiden.

Zur Herstellung des erfindungsgemäßen Filters werden die als Feinfilter und als Tiefenfilter wirkenden Vliesstoffe getrennt in an sich bekannter Weise erzeugt und thermisch oder chemisch verfestigt. In einem folgenden Schritt werden sie aufeinander abgelegt und an ihrer Berührungsfläche mechanisch oder durch Verschweißen oder Verkleben miteinander verbunden. Die Verbindung der beiden Schichten erfolgt beispielsweise durch einen Schmelzkleber, der zum Beispiel in Pulver- oder Fadenform appliziert werden kann, durch Vernadeln, oder in einer bevorzugten Ausführungsform durch spezielle Folien aus Schmelzklebern. Weitere besondere Ausführungsformen werden später im Text noch vorgestellt.

Die wichtigste Anforderung für Filtergewebe und Faservliesstoffe ist eine möglichst große Luftdurchlässigkeit bei hohem Rückhaltevermögen für den Staub. Es hat sich gezeigt, daß diesen Anforderungen am besten Filtermaterialien genügen, bei denen der Tiefenfilter die 2- bis 20-fache, bevorzugt 3- bis 10-fache Schichtdicke der Feinfilterschicht aufweist, die in der Regel eine Dicke zwischen 0,2 - 0,6 mm besitzt. Um einerseits eine ausreichende Luftdurchlässigkeit des Filters zu gewährleisten, Verstopfungen des Filtermaterials zu vermeiden und andererseits eine höchstmögliche Entstaubung des Gases zu erzielen, liegt die Packungsdichte des Feinfilters zwischen 0,10 und 0,20 g/cm³, bevorzugt aber zwischen 0,12 und 0,16 g/cm³, die des Tiefenfilters dagegen zwischen 0,08 und 0,15 g/cm³, vorzugsweise aber zwischen 0,10 und 0,13 g/cm³.

In einer besonderen Ausführungsform des erfindungsgemäßen Filters besitzen die Filamente der beiden Vliesstoffe unterschiedliche Titer, wobei die Titer des Tiefenfilters in der Regel zwischen 4 und 20 dtex, bevorzugt zwischen 8 und 12 dtex liegen. Die Titer des Feinfilters werden bevorzugt geringer gewählt und haben Werte zwischen 1 und 6 dtex, vorzugsweise zwischen 2 und 4 dtex. Das erfindungsgemäße Filter weist erhöhte Standzeiten gegenüber den gebräuchlichen Filtermaterialien auf. Dies ist auf die stabilisierende Wirkung des Feinfilters zurückzuführen, das zugleich eine gute Plissierfähigkeit des Schichtstoffes bewirkt, wordurch die spezifische Filterfläche pro Volumen auf ein Vielfaches erhöht werden kann, was wiederum längere Benutzungszeiten und eine höhere Filtrationsrate gewährleistet. Das Flächengewicht des Feinfilters liegt zu diesem Zweck im Bereich zwischen 30 und 100 g/m² und damit unter dem des Tiefenfilters, der ein Flächengewicht zwischen 150 bis 500 g/m² besitzt.

Durch richtige Wahl der Fasertiter, der Dichte des Fasermaterials und der Packungsdichte ist es ferner möglich den Aufbau der erfindungsgemäßen Filter auf spezielle Anforderungen in den verschiedenen Anwendungsbereichen abzustimmen.

Prinzipiell können Vliese aus Fasern bestehen, die entweder begrenzte Längen, zum Beispiel von einigen Millimetern, bis zu der normalerweise für das Verspinnen von Fasern üblichen Länge haben, oder aus Endlosfilamenten. Als Fasern für die Vliese kommen sowohl Jute, oder Tierfasern, zum Beispiel Eiweißfasern wie Wolle, als auch Chemiefasern aus natürlichen und synthetischen Polymeren in Betracht. Die Chemiefasern sind gegenüber den Naturfasern bevorzugt, da sie die qualitativen Anforderungen, die an die verwendeten Materialien gestellt werden, am besten erfüllen. So ist es zum Beispiel möglich, die Faserstärken der synthetischen Filamente zu variieren und ihre mechanischen Eigenschaften zu optimieren. Ebenso weisen sie eine höhere thermische Belastbarkeit und chemische Resistenz auf, so daß die daraus gefertigten Vliese als Filtermaterialien auch bei höheren Temperaturen und zur Entstaubung aggressiver Gase geeignet sind. So darf zum Beispiel die Temperatur der zu entstaubenden Gase bei Wolle als Fitermaterial nicht höher als 100 °C liegen, während mit Synthesefasern sogar bei über 150 °C bei Polytetrafluorethylen (Hostaflon®) sogar bis 220 °C gearbeitet werden kann.

Als synthetische Polymere für die Vliese kommen z. B. Polyolefine, Polyacrylnitril, Polyamid oder Polyester in Betracht, wobei wegen der günstigen Verarbeitungsmöglichkeiten Polyamide und Polyester, insbesondere aber die letzteren zur Herstellung von Vliesen bevorzugt sind. Unter den Polyestern wird vorzugsweise Polyethylenterephthalat eingesetzt. Die Vliese können aus Endlos- oder Stapelfasern bestehen; insbesondere bevorzugt sind Spinnvliesstoffe aus schmelzgesponnenen synthetischen Materialien, vorzugsweise Polyester, insbesondere Polyethylenterephthalat.

Die Vliesbildung kann nach verschiedenen an sich bekannten Verfahren erfolgen, wobei mechanische, aerodynamische und hydrodynamische Vliesbildung für natürliche und synthetische Spinnfasern und Filamente und elektrostatische Vliesbildung für Feinstfasern verwendet werden. Spinnvliese werden vorzugsweise aus nach dem Schmelzspinnverfahren ersponnenen Filamenten aus Thermoplasten, z. B. Polyethylen, Polypropylen, Polyamid oder Polyester, bevorzugt Polyethylenterephthalat gebildet, die anschließend durch Vernadeln, Schrumpfbehandlung oder durch Zugabe von Bindemitteln verfestigt werden. Bevorzugt wird das sogenannte Spunbond-Verfahren zur Herstellung von Vliesstoffen aus synthetischen Fäden, bei den die fadenbildenden Polymere in einem Arbeitsgang schmelzgesponnen und in Luftströmen abgekühlt, verstreckt und dann direkt als Vlies abgelegt werden. Die Spinnvliesstoffe sind als Basismaterial für das erfindungsgemäße Filtermaterial wegen ihren wirtschaftlichen und qualitativen Vorteilen gegenüber anderen Vliesstoffen besonders bevorzugt.

Die zur Herstellung des erfindungsgemäßen Filters verwendeten Vliesstoffe werden bevorzugt im verfestigten Zustand eingesetzt. Die Verfestigung der Vliese kann in jeder an sich bekannten Weise erfolgen, z. B. durch thermische Verfestigung unter Druck, indem das Vlies einer Kalandrierung unterworfen wird oder durch Nadeln oder durch thermische Verfestigung unter Verwendung von Bindemitteln, bevorzugt Schmelzklebern, z. B. in Faden- oder Pulverform, wobei der Schmelzkleber einen Schmelzpunkt haben muß der niedriger liegt als der des Fasermaterials des Vlieses, oder die Vorverfestigung kann durch eine Kombination der obengenannten Maßnahmen erfolgen.

Die durch Verschweißen oder Verkleben erzielte Verbindung zwischen den Vliesstoffen des Schichtstoffes muß so erfolgen, daß sich insgesamt eine unter normalen Beanspruchungen nicht zum Delaminieren neigende Struktur ergibt. Die Schweiß- oder Klebeverbindung kann dabei an einer Vielzahl von beabstandeten Punkten erfolgen, die entweder statistisch oder in Form eines mehr oder weniger regelmäßigen Rapports so verteilt sind, daß eine gleichmäßige Haftung der Schichten aneinander erreicht wird. Die Verbindung der Schichten kann aber auch in parallelen oder gekreuzten beabstandeten linearen Bereichen erfolgen. Soll die Verbindung durch Schweißen erfolgen, so ist es vorteilhaft, die Verschweißung wie oben beschrieben , punktuell, d. h. an einer Vielzahl von Einzelpunkten oder an einer Vielzahl beabstandeter, in Form anderer gegebenenfalls sich kreuzender linearer Bereiche oder geometrischer Figuren, erfolgen wobei das Aufdrucken der Binderpunkte z. B. auch durch Siebdruck erfolgen kann. Je nach Art der Verklebung punktuell oder in linearen Bereichen wird der Kleber zwischen die zu verbindenden Schichten eingebracht. Als Klebstoffe eignen sich z. B. Schmelzkleber, die in den entsprechenden Bereichen punktuell oder linear in Form eines Pulvers oder einer Paste zwischen den Schichten angeordnet sind, oder aber eingedickte Dispersionen aus verschiedenen Homo- oder Copolymeren, die entweder durch Verdunsten eines Lösungsmittels oder durch einen anderen Abbindeprozeß wie z. B. durch einen Vernetzungsprozeß erhärten und eine dauerhafte Verbindung der Schichten vermitteln können.

Bei der Verbindung der beiden Vliesstoffbahnen muß ein Verfahren gewählt werden, das nicht zu einem zu großflächigen oder gar vollflächigen Abdecken der beiden Flächen führt, so daß nach dem Vorgang noch eine gute Luftdurchlässigkeit gewährleistet ist.

Diesen Vorgang bezeichnet man auch als Kaschieren, was in diesen Fall jedoch nicht einer vollständigen Bedeckung bzw. Abdeckung entspricht. Besonders bevorzugt für die Herstellung der Verbindung zwischen den Einzelschichten sind Schmelzkleber, da diese ohne Abgabe von Lösungsmitteldämpfen oder Einsatz aggressiver Chemikalien verarbeitet werden können. Als Klebestoffe eignen sich alle weiter vorn angegebenen bekannten Klebemittel, die in einer ihr adequaten Weise appliziert werden. Die Zufuhr von Klebstoffen ist selbstverständlich nur dann erforderlich, wenn die Verbindung der Schichten durch Verkleben erfolgen soll; sie kann entfallen, wenn die Verbindung durch Verschweißen erzielt wird.

Bei der sogenannten Flammkaschierung, bei der eine oberflächliche Erweichung von Schaumstoffen, Schaumstoffbahnen aus Polyester oder Polyetherschaumstoffen oder Polyurethanen mittels Gasflamme erfolgen kann, kann durch die Wahl der Schaumdichte und der Intensität der Beflammung die Klebekraft gesteuert werden.

Anstelle eines Klebstoffauftrages kann zwischen den Filamentvliesstoffschichten auch eine der an sich bekannten Folien aus Schmelzkleber eingelegt werden, deren Schmelzpunkt unterhalb des Schmelzpunktes der Vliesstoff-Fasern liegen muß. Ein solcher besonders bevorzugter Kaschiervorgang ist z. B. mittels einer Schlitzfolie, die aus verschiedenen Polymeren hergestellt sein kann, möglich und erlaubt es Schichtstoffe mit definierten Luftdurchlässigkeiten herzustellen. Dabei wird eine Schlitzfolie auf eine der beiden Vliesstoffbahnen aufgelegt und mittels Infrarotlampen bestrahlt. Dabei öffnet sich der geschlitzte Film und bildet ein klebriges, netzförmiges Gebilde aus. Durch Zusammenführung der miteinander zu verbindenden Stoffe und Ausübung eines Walzendrucks kommt es zu einer innigen, aber luftdurchlässigen Verbindung der beide Bahnen. Bei einem ebenfalls besonders bevorzugten Kaschiervorgang kann die Verbindung der beiden Flächengebilde durch eine zwischen den beiden Filamentvliesstoffen eingebrachten Lage eines Bindefaservliesstoffes erfolgen.

Bei derartigen Bindefaservliesstoffen handelt es sich im allgemeinen um relativ grobtitrige Fasern aus Polyolefinen, deren Schmelzpunkt unter dem der zu verbindenden Filamentvliesstoffe liegt, so daß eine Verbindung der drei Lagen durch eine entsprechende Wärmeeinwirkung erzielt werden kann, die gerade ausreicht um den Bindefaservliesstoff zu erweichen, nicht jedoch die ihn umgebenden Filamentvliesstoffe.

Die Hitzebehandlung oder die kombinierte Druck- und Hitzebehandlung des Stapels, die zur festen Verbindungsart anzupassen. Soll die Verbindung der Schichten ohne die Vermittlung eines Klebemittels erfolgen, so wird die punktuelle oder lineare Verbindung der Schichten durch eine kombinierte Druck- und Hitzebehandlung, vorzugsweise in einem geeigneten beheizten Kalander, insbesondere einem mit Prägewalzen ausgestatteten Kalander, durchgeführt. Bei dieser Heißkalandrierung werden vorzugsweise Muster mit regelmäßigem Rapport in die Oberfläche des Schichtstoffs eingedrückt, was vermutlich zu einer kombinierten mechanischen Verhakung und örtlichen oberflächigen Verschweißungen der Schichtmaterialien führt. Es zeigt sich, daß dadurch eine sehr feste Verbindung der Schichten des Schichtstoffes erzielt werden kann. Bei Applikation eines Klebemittels in einer der oben angegebenen Formen kann die Verbindung der Schichten auch unter einem relativ geringen Druck erfolgen, der nur ausreicht, die Schichten ohne Blasenbildung und Zwischenraum aufeinander zu drücken. Die Hitzebehandlung ist der Natur des Klebstoffs anzupassen, d. h. bei Verwendung eines Schmelzklebers muß die Temperatur oberhalb dessen Schmelzpunktes liegen. Zur Ausführung der Verklebung ist im Prinzip jede Einrichtung geeignet, die es gestattet, das Material auf die erforderliche Temperatur zu erhitzen unter gleichzeitiger Gewährleistung einer ausreichend guten Flächenberührung. Besonders geeignet ist auch in diesem Fall ein beheizter Kalander, speziell ein Filzkalander.

Das erfindungsgemäße Filtermaterial eignet sich aufgrund seiner guten Langzeitfiltereigenschaften und der guten Plissierfähigkeit besonders gut für Filterkassetten und für Filterpatronen als Faltenfilter.

### Beispiel

Auf einer Spinnvliesanlage, bestehend aus einem Extruder, einem Spinnkopf mit Spinndüse, einem pneumatischen Abzugsorgan und einem Ablageband, wurden verschiedene Vliese aus Polyethylenterephthalat hergestellt.

Das Flächengewicht der Vliesstoffe betrug für das Tiefenfilter 300 g/m² und für das Feinfilter 80 g/m², bei Titern von 8 dtex bzw. 3 dtex für das Feinfilter.

Der Tiefenfilter wird mit Hilfe von Filznadeln mechanisch verfestigt und danach bei Temperaturen oberhalb 180 °C thermofixiert. Der Feinfilter ist mittels eines Prägekalanders vorverfestigt und anschließend mit einer Polymerdispersion imprägniert, getrocknet und kondensiert.

Die Kaschierung der beiden Vliesstoffe erfolgt z. B. mit einer Schlitzfolie, bestehend aus einem modifizierten Polyolefin der Firma XIRO AG. Diese Schlitzfolie zeichnet sich durch hohe adhäsive Eigenschaften aus. Das Flächengewicht der Folie betrug 30 g/m² bei einer Schlitzzahl von 66 000/m².

Bei einem Schmelzpunkt des Polymers von 90 °C wurde bei einer Kaschiertemperatur von durchschnittlich 170 °C gearbeitet, die mit Hilfe von Infrarotlampen erzeugt wurde.

Es wurden folgende Luftdurchlässigkeiten ermittelt:

| | Luftdurchlässigkeit |
|---|---|
| 1.) nur Tiefenfilter TREVIRA-Spunbond Type 10/300 g/m² | 8000 m³/h/m² |
| 2.) nur Feinfilter TREVIRA-Spunbond V 62/80 g/m² | 4500 m³/h/m² |
| 3.) Erfindungsgemäßes Filtermaterial Kombination von Tiefen- und Feinfilter | 1000 m³/h/m² |

| Type | T 10/300 | V 62/80 |
|---|---|---|
| Polymer | PES | PES |
| Titer (dtex) | 8 | 3 |
| Flächengewicht (g/m²) | 300 | 80 |
| Packungsdichte (g/cm³) | 0,111 | 0,145 |
| Schichtdicke (mm) | 2,70 | 0,55 |

## Patentansprüche

1. Zweischichtiges Filtermaterial bestehend aus einem Fein- und einem Tiefenfilter die beide senkrecht zu ihrer Fläche eine homogene Dichte aufweisen und aus Filamenten gleicher oder verschiedenartiger Polymere gefertigt sind, dadurch gekennzeichnet, daß der Tiefenfilter ein Flächengewicht von 150 bis 500 g/m² und eine Packungsdichte von 0,08 bis 0,15 g/cm³ aufweist und der Feinfilter, der sich auf der Reinluftseite befindet, ein Flächengewicht von 30 bis 100 g/m² und eine Packungsdichte von 0,1 bis 0,2 g/cm³ aufweist und der Tiefen- und Feinfilter in der Art und Weise miteinander verbunden sind, daß die Flächendeckung der Verbindungspunkte 75 % nicht übersteigt.

2. Filtermaterial gemäß Anspruch 1, dadurch gekennzeichnet, daß der Tiefenfilter ein filzartiger, Filamentvliesstoff ist.

3. Filtermaterial gemäß mindestens einem der Ansprüche 1 bis 2, dadurch gekennzeichnet, daß der Tiefenfilter die 2- bis 20-fache Dicke der Feinfilterschicht aufweist.

4. Filtermaterial gemäß mindestens einem der Ansprüche 1 bis 3, dadurch gekennzeichnet, daß die einzelnen Schichten aus unterschiedlichen Titern gefertigt sind.

5. Filtermaterial gemäß mindestens einem der Ansprüche 1 bis 4, dadurch gekennzeichnet, daß der Tiefen- und der Feinfilter mittels einer thermoplastischen Schlitzfolie verbunden sind.

6. Filtermaterial gemäß mindestens einem der Ansprüche 1 bis 5, dadurch gekennzeichnzet, daß die Flächendeckung der Klebstellen unter 50 % liegt.

7. Filtermaterial gemäß mindestens einem der Ansprüche 1 bis 6, dadurch gekennzeichnet, daß der Feinfilter eine Dicke von 0,2 bis 0,6 mm besitzt.

8. Filtermaterial gemäß mindestens einem der Ansprüche 1 bis 7, dadurch gekennzeichnet, daß der Einzeltiter des Tiefenfilters zwischen 4 und 20 dtex liegt.

9. Filtermaterial gemäß mindestens einem der Ansprüche 1 bis 8, dadurch gekennzeichnet, daß der Einzeltiter des Feinfilters zwischen 1 und 6 dtex liegt.

10. Filtermaterial gemäß mindestens einem der Ansprüche 1 bis 9, dadurch gekennzeichnet, daß das Filtermaterial plissierfähig ist.

11. Verfahren zur Herstellung eines zweischichtigen Filtermaterials bestehend aus einem Fein- und einem Tiefen-filter die beide senkrecht zu ihrer Fläche eine homogene Dichte aufweisen und aus Filamenten gleicher oder verschiedenartiger Polymere gefertigt sind umfassend die Maßnahmen:
A) Getrennte Herstellung der als Feinfilter und als Tiefenfilter wirkenden Vliesstoffe,
B) nachfolgende thermische oder chemische Verfestigung der Feinfilter und Tiefenfilter aus Schritt A,
C) nachfolgend Aufeinanderablegen der Feinfilter und Tiefenfilter aus Schritt B und
D) Verbinden der gemäß Schritt C abgelegten Feinfilter und Tiefenfilter an ihrer Berührungsfläche auf mechanische Art, durch Verschweißen oder Verkleben,
dadurch gekennzeichnet, daß der Tiefenfilter ein Flächengewicht von 150 bis 500 g/m² und eine Packungsdichte von 0,08 bis 0,15 g/cm³ aufweist und der Feinfilter, der sich auf der Reinluftseite befindet, ein Flächengewicht von 30 bis 100 g/m² und eine Packungsdichte von 0,1 bis 0,2 g/cm³ aufweist und der Tiefen- und Feinfilter in der Art und Weise miteinander verbunden sind, daß die Flächendeckung der Verbindungspunkte 75 % nicht übersteigt.

## Claims

1. A two-layered filter material composed of a fine filter and a depth filter which both have a homogeneous density perpendicular to their surface and are fabricated from filaments of identical or different polymers, characterized in that the depth filter has a basis weight of 150 to 500 g/m² and a packing density of 0.08 to 0.15 g/cm³ and the fine filter, which is located on the clean air side, has a basis weight of 30 to 100 g/m² and a packing density of 0.1 to 0.2 g/cm³ and the depth and fine filters are connected together in such a way that the area coverage due to the connection points does not exceed 75%.

2. The filter material as claimed in claim 1, characterized in that the depth filter is a filament nonwoven with felt characteristics.

3. The filter material as claimed in at least one of claims 1 to 2, characterized in that the depth filter is from 2 to 20 times thicker than the fine filter.

4. The filter material as claimed in at least one of claims 1 to 3, characterized in that the individual layers are fabricated from different linear densities.

5. The filter material as claimed in at least one of claims 1 to 4, characterized in that the depth and the fine filters are connected together by means of a thermoplastic slit film.

6. The filter material as claimed in at least one of claims 1 to 5, characterized in that the area coverage due to the connection points is less than 50%.

7. The filter material as claimed in at least one of claims 1 to 6, characterized in that the fine filter is from 0.2 to 0.6 mm in thickness.

8. The filter material as claimed in at least one of claims 1 to 7, characterized in that the filament linear density of the depth filter is between 4 and 20 dtex.

9. The filter material as claimed in at least one of claims 1 to 8, characterized in that the filament linear density of the fine filter is between 1 and 6 dtex.

10. The filter material as claimed in at least one of claims 1 to 9, characterized in that the filter material is pleatable.

11. A process for manufacturing a two-layered filter material composed of a fine filter and a depth filter which both have a homogeneous density perpendicular to their surface and are fabricated from filaments of identical or different polymers comprising the measures:
A) Separate production of the nonwovens acting as fine filter and as depth filter,
B) subsequent thermal or chemical consolidation of the fine filter and depth filter of step A,
C) subsequently superposition of the fine filter and depth filter of step B, and
D) connecting the fine filter and depth filter superposed in step C together at their contact surface mechanically, by welding or adhering,
characterized in that the depth filter has a basis weight of 150 to 500 g/m² and a packing density of 0.08 to 0.15 g/cm³ and the fine filter, which is located on the clean air side, has a basis weight of 30 to 100 g/m² and a packing density of 0.1 to 0.2 g/cm³ and the depth and fine filters are connected together in such a way that the area coverage due to the connection points does not exceed 75%.

## Revendications

1. Matériau filtrant en deux couches constitué d'un filtre fin et d'un filtre à lit profond qui présentent tous les deux une densité homogène dans le sens perpendiculaire à la surface et qui sont fabriqués à partir de filaments de polymères identiques ou différents, caractérisé en ce que le filtre à lit profond a une masse par unité de surface de 150 à 500 g/m² et une densité de tassement de 0,08 à 0,15 g/cm³ et en ce que le filtre fin, qui se trouve du côté de l'air pur, a une masse par unité de surface de 30 à 100 g/m² et une densité de tassement de 0,1 à 0,2 g/cm³, et le filtre à lit profond et le filtre fin sont reliés entre eux de façon que les points de liaison ne recouvrent pas plus de 75 % de la surface.

2. Matériau filtrant selon la revendication 1, caractérisé en ce que le filtre à lit profond est un non-tissé de filament de type feutre.

3. Matériau filtrant selon l'une au moins des revendications 1 à 2, caractérisé en ce que le filtre à lit profond a 2 à 20 fois l'épaisseur de la couche du filtre fin.

4. Matériau filtrant selon l'une au moins des revendications 1 à 3, caractérisé en ce que les différentes couches sont fabriquées à partir de titres différents.

5. Matériau filtrant selon l'une au moins des revendications 1 à 4, caractérisé en ce que le filtre à lit profond et le filtre fin sont assemblés au moyen d'une feuille à fentes thermoplastique.

6. Matériau filtrant selon l'une au moins des revendications 1 à 5, caractérisé en ce que les points de collage recouvrent moins de 50 % de la surface.

7. Matériau filtrant selon l'une au moins des revendications 1 à 6, caractérisé en ce que le filtre fin a une épaisseur de 0,2 à 0,6 mm.

8. Matériau filtrant selon l'une au moins des revendications 1 à 7, caractérisé en ce que le titre individuel du filtre à lit profond est compris entre 4 et 20 dtex.

9. Matériau filtrant selon l'une au moins des revendications 1 à 8, caractérisé en ce que le titre individuel du filtre fin est compris entre 1 et 6 dtex.

10. Matériau filtrant selon l'une au moins des revendications 1 à 9, caractérisé en ce que le matériau filtrant est susceptible d'être plissé.

11. Procédé de fabrication d'un matériau filtrant à deux couches constitué d'un filtre fin et d'un filtre à lit profond qui présentent tous les deux une densité homogène dans le sens perpendiculaire à la surface et qui sont fabriqués à partir de filaments de polymères identiques ou différents, qui comprend les opérations selon lesquelles:
A) on fabrique séparément les non-tissés servant de filtre fin et de filtre à lit profond,
B) on consolide ensuite par un moyen thermique ou chimique le filtre fin et le filtre à lit profond de l'étape A),
C) on superpose ensuite le filtre fin et le filtre à lit profond de l'étape B, et
D) on relie entre eux par un moyen mécanique, par soudage ou par collage, le filtre fin et le filtre à lit profond déposés dans l'étape C, au niveau de leur surface de contact,
caractérisé en ce que le filtre à lit profond a une masse par unité de surface de 150 à 500 g/m² et une densité de tassement de 0,08 à 0,15 g/cm³ et en ce que le filtre fin, qui se trouve du côté de l'air pur, a une masse par unité de surface de 30 à 100 g/m² et une densité de tassement de 0,1 à 0,2 g/cm³, et le filtre à lit profond et le filtre fin sont reliés entre eux de façon que les points de liaison ne recouvrent pas plus de 75 % de la surface.
